(19) Europäisches Patentamt

European Patent Office

Office européen des brevets

(11) **EP 2 993 614 B1**

(12) **EUROPEAN PATENT SPECIFICATION**

(45) Date of publication and mention of the grant of the patent:
**02.10.2019 Bulletin 2019/40**

(51) Int Cl.:
***G06K 9/00*** *(2006.01)*

(21) Application number: **15176898.3**

(22) Date of filing: **15.07.2015**

(54) **METHOD AND DEVICE FOR FACIAL RECOGNITION**

VERFAHREN UND VORRICHTUNG ZUR GESICHTSERKENNUNG

PROCÉDÉ ET DISPOSITIF POUR LA RECONNAISSANCE FACIALE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.09.2014 KR 20140118828**
           **07.01.2015 KR 20150001850**

(43) Date of publication of application:
**09.03.2016 Bulletin 2016/10**

(73) Proprietor: **Samsung Electronics Co., Ltd.**
**Gyeonggi-do 443-742 (KR)**

(72) Inventors:
• **Kim, Jungbae**
  **443-803 Geonggi-do (KR)**

• **Rhee, Seon min**
  **443-803 Geonggi-do (KR)**
• **Hwang, Youngkyoo**
  **Geonggi-do (KR)**
• **Han, Jaejoon**
  **Geonggi-do (KR)**

(74) Representative: **Grootscholten, Johannes A.M. et al**
**Arnold & Siedsma**
**Bezuidenhoutseweg 57**
**2594 AC The Hague (NL)**

(56) References cited:
**EP-A2- 2 133 819**    **US-A1- 2002 106 114**
**US-A1- 2003 123 713**    **US-A1- 2006 245 639**
**US-A1- 2013 287 294**

**Description**

BACKGROUND

1. Field

At least some example embodiments relate to facial recognition technology to identify a face of a user.

2. Description of the Related Art

Facial recognition technology is considered a convenient and competitive bio-recognition technology that may verify a target without contact with the target, dissimilar to other recognition technologies, for example, fingerprint and iris recognition, that require a user to conduct a certain motion or an action. Such facial recognition technology, as e.g. disclosed in EP2133819, has been widely used in various application fields, for example, security systems, mobile authentication, and multimedia searches due to convenience and effectiveness of the facial recognition technology.

SUMMARY

At least some example embodiments relate to a facial recognition method.

In at least some example embodiments, the method may include detecting a facial feature point from a two-dimensional (2D) input image, adjusting a stored three-dimensional (3D) facial model based on the detected facial feature point, generating a 2D projection image from the adjusted 3D facial model, and performing facial recognition based on the 2D input image and the 2D projection image.

The adjusting the stored 3D facial model adjusts a facial pose and a facial expression of the stored 3D facial model by mapping the detected facial feature point to the stored 3D facial model.

The stored 3D facial model includes a 3D shape model and a 3D texture model. The 3D shape model and the 3D texture model may be 3D models in which a facial pose and a facial expression are deformable.

The adjusting the 3D facial model may include adjusting the stored 3D shape model based on the facial feature point detected from the 2D input image, and adjusting the 3D texture model based on parameter information of the adjusted 3D shape model.

The adjusting the stored 3D shape model adjusts a pose parameter and an expression parameter of the 3D shape model based on the detected facial feature point.

The generating the 2D projection image generates the 2D projection image from the adjusted 3D texture model.

The stored 3D facial model may be generated based on feature points detected from a plurality of 2D face images, and the 2D face images may be images obtained by capturing a face of a user from a plurality of viewpoints.

The performing the facial recognition may include determining a degree of similarity between the 2D input image and the 2D projection image, and outputting a result of the facial recognition based on whether the degree of similarity satisfies a condition.

The detecting the facial feature point may include extracting a face region from the 2D input image, and detecting the facial feature point in at least one of eyebrows, eyes, a nose, lips, a chin, ears, and a facial contour from the detected face region.

In some example embodiments, the method may include obtaining 2D face images of a user from a plurality of viewpoints, detecting facial feature points from the 2D face images, generating a deformable 3D shape model and a deformable 3D texture model based on the detected facial feature points, and storing the deformable 3D shape model and the deformable 3D texture model as a 3D facial model of the user.

The generating generates the deformable 3D texture model based on the deformable 3D shape model and texture information from at least one of the 2D face images.

The generating include determining a parameter to map the detected facial feature points to feature points of a 3D standard model, and generating the deformable 3D shape model by applying the determined parameter to the 3D standard model.

In at least some example embodiments, the method may include obtaining 2D face images and direction data of the 2D face images, the 2D face images including a face of a user, determining information on matching points among the 2D face images, generating 3D data of the face of the user based on the direction data of the 2D face images and the information on the matching points, and transforming a 3D standard model to a 3D facial model of the user using the 3D data.

The obtaining obtains the direction data of the 2D face images using motion data sensed by a motion sensor.

The 3D data on the face of the user may be a set of 3D points configuring a shape of the face of the user.

The transforming transforms the 3D standard model to the 3D facial model of the user by matching the 3D standard model to the 3D data of the face of the user.

At least other example embodiments relate to a facial recognition apparatus.

In at least some example embodiments, the apparatus may include an image acquirer configured to obtain a 2D input image including a face region of a user, a 3D facial model processor configured to adjust a facial pose of a stored 3D facial model based on a facial pose of the user appearing in the 2D input image and generate a 2D projection image from the adjusted 3D facial model, and a face recognizer configured to perform facial recognition based on the 2D input image and the 2D projection image.

The 3D facial model processor may include a face region detector configured to detect a face region from the 2D input image, and a feature point detector configured to detect a facial feature point from the detected face region.

The 3D facial model processor may adjust the facial pose of the stored 3D facial model by matching the detected facial feature point to a feature point of the stored 3D facial model.

The 3D facial model processor may adjust a facial pose of a 3D shape model based on the facial pose of the user appearing in the 2D input image and adjust a 3D texture model based on parameter information of the adjusted 3D shape model.

The facial recognition apparatus may further include a display configured to display at least one of one of the 2D input images, the 2D projection image, and a result of the facial recognition.

In at least some example embodiments, the apparatus may include an image acquirer configured to obtain 2D face images of a user from a plurality of viewpoints, a feature point detector configured to detect facial feature points from the 2D face images, a 3D facial model generator configured to generate a deformable 3D shape model and a deformable 3D texture model based on the detected facial feature points, and a 3D facial model registerer configured to store the deformable 3D shape model and the deformable 3D texture model as a 3D facial model of the user.

The 3D facial model generator may include a 3D shape model generator configured to generate a deformable 3D shape model of a face of the user based on the detected facial feature points, and a 3D texture model generator configured to generate a deformable 3D texture model based on the deformable 3D shape model and texture information from at least one of the 2D face images.

In at least some example embodiments, the apparatus may include an image acquirer configured to obtain 2D face images of a user from a plurality of viewpoints, a motion sensing unit configured to obtain direction data of the 2D face images, a 3D facial model generator configured to generate 3D data of a face of the user based on information on matching points among the 2D face images and the direction data of the 2D face images, the 3D facial model generator configured to transform a 3D standard model to a 3D facial model of the user using the 3D data, and a 3D facial model registerer configured to store the 3D facial model of the user.

Additional aspects of example embodiments will be set forth in part in the description which follows and, in part, will be apparent from the description, or may be learned by practice of the disclosure.

BRIEF DESCRIPTION OF THE DRAWINGS

These and/or other aspects will become apparent and more readily appreciated from the following description of example embodiments, taken in conjunction with the accompanying drawings of which:

FIG. 1 is a diagram illustrating an overall operation of a facial recognition system according to at least one example embodiment;

FIG. 2 is a diagram illustrating a configuration of a three-dimensional (3D) facial model generating apparatus according to at least one example embodiment;

FIG. 3 is a diagram illustrating a configuration of a facial recognition apparatus according to at least one example embodiment;

FIG. 4 illustrates a process of detecting feature points from two-dimensional (2D) face images according to at least one example embodiment;

FIG. 5 illustrates a process of generating a 3D facial model using a 3D standard model according to at least one example embodiment;

FIG. 6 illustrates a process of adjusting a 3D facial model based on a feature point detected from a 2D input image according to at least one example embodiment;

FIG. 7 illustrates a process of performing facial recognition by comparing a 2D input image to a 2D projection image according to at least one example embodiment;

FIG. 8 is a flowchart illustrating a 3D facial model generating method according to at least one example embodiment;

FIG. 9 is a flowchart illustrating a facial recognition method according to at least one example embodiment;

FIG. 10 is a diagram illustrating another configuration of a 3D facial model generating apparatus according to at least one example embodiment; and

FIG. 11 is a flowchart illustrating another 3D facial model generating method according to at least one example embodiment.

## DETAILED DESCRIPTION

Hereinafter, some example embodiments will be described in detail with reference to the accompanying drawings. Regarding the reference numerals assigned to the elements in the drawings, it should be noted that the same elements will be designated by the same reference numerals, wherever possible, even though they are shown in different drawings. Also, in the description of example embodiments, detailed description of well-known related structures or functions will be omitted when it is deemed that such description will cause ambiguous interpretation of the present disclosure.

It should be understood, however, that there is no intent to limit this disclosure to example embodiments disclosed. On the contrary, example embodiments are to cover all modifications, equivalents, and alternatives falling within the scope of the example embodiments. Like numbers refer to like elements throughout the description of the figures.

In addition, terms such as first, second, A, B, (a), (b), and the like may be used herein to describe components. Each of these terminologies is not used to define an essence, order or sequence of a corresponding component but used merely to distinguish the corresponding component from other component(s).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Various example embodiments will now be described more fully with reference to the accompanying drawings in which some example embodiments are shown. In the drawings, the thicknesses of layers and regions are exaggerated for clarity.

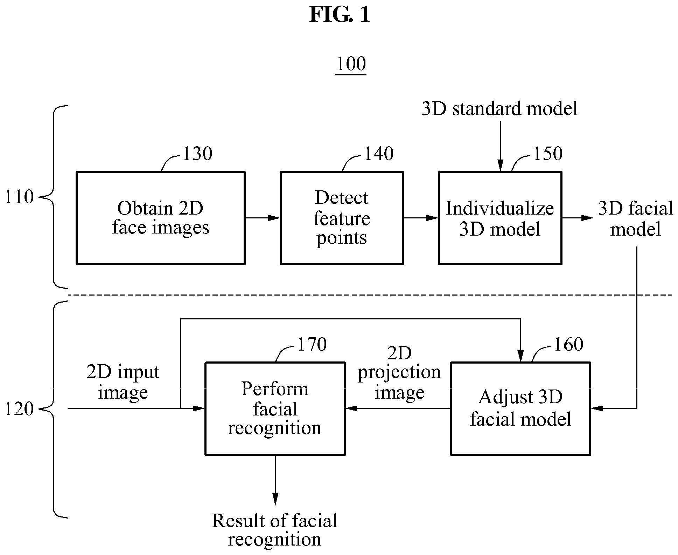

FIG. 1 is a diagram illustrating an overall operation of a facial recognition system 100 according to at least one example embodiment. The facial recognition system 100 may recognize a face of a user from a two-dimensional (2D) input image used for facial recognition. The facial recognition system 100 may extract and identify the face of the user appearing in the 2D input image by analyzing the 2D input image. The facial recognition system 100 may be used in various application fields, for example, security and surveillance systems, mobile authentication, and multimedia data searches.

The facial recognition system 100 may register a three-dimensional (3D) facial model of the user and perform the facial recognition using the registered 3D facial model. The 3D facial model may be a deformable 3D model that may be deformed depending on a facial pose or a facial expression of the user appearing in the 2D input image. For example, when a facial pose appearing in the 2D input image faces a left side, the facial recognition system 100 may rotate the registered 3D facial model to face the left side. In addition, the facial recognition system 100 may adjust a facial expression of the 3D facial model based on a facial expression of the user appearing in the 2D input image. For example, the facial recognition system 100 may analyze the facial expression of the user based on a facial feature point detected from the 2D input image, and adjust a shape of an eye, a lip, and a nose of the 3D facial model to allow the adjusted shape to correspond to the analyzed facial expression.

The facial recognition system 100 may generate a 2D projection image from the registered 3D facial model, and perform the facial recognition by comparing the 2D projection image to the 2D input image. The facial recognition may be performed in real time using 2D images. The 2D projection image refers to a 2D image obtained by projecting the 3D facial model to a plane. For example, the 2D projection image may be a 2D image obtained by projecting the 3D facial model matched to the 2D input image at a viewpoint identical or similar to a viewpoint in the 2D input image and thus, a facial pose appearing in the 2D projection image may be identical or similar to a facial pose of the user appearing in the 2D input image. The facial recognition may be performed by matching the prestored 3D facial model to the facial pose appearing in the 2D input image, and comparing the 2D projection image to the 2D input image. Although the facial pose of the user appearing in the 2D input image does not face a front side, an improved recognition rate may be achieved in response to a change in the pose by matching the 3D facial model to the facial pose appearing in the 2D input image and performing the facial recognition.

Hereinafter, operations of the facial recognition system 100 will be described in detail. Facial recognition performed by the facial recognition system 100 may include a process 110 of registering a 3D facial model of a user and a process 120 of recognizing a face of the user from a 2D input image using the registered 3D facial model.

Referring to FIG. 1, in operation 130 of process 110, the facial recognition system 100 obtains a plurality of 2D face images of the user used for face registration. The 2D face images may include images of the face of the user captured from various viewpoints. For example, the facial recognition system 100 may obtain 2D face images captured through a camera from a front side and a lateral side of the face of the user. A 2D face image may refer to an image including a face region of the user, but may not necessarily include an entire region of the face of the user. In operation 140 of process 110, the facial recognition system 100 detects facial feature points, for example, landmarks, from the 2D face images. For example, the facial recognition system 100 may detect feature points including eyebrows, eyes, a nose, lips, a chin, hair, ears, and/or a facial contour from the 2D face images of the user.

In operation 150 of process 110, the facial recognition system 100 individualizes a 3D model by applying, to a predetermined and/or selected 3D standard model, the feature points extracted from the 2D face images used for the face registration. For example, the 3D standard model may be a deformable 3D shape model generated based on 3D face training data. The 3D standard model may include a 3D shape and a 3D texture, and parameters expressing the 3D shape. The facial recognition system 100 may generate a 3D facial model on the face of the user by matching feature points of the 3D standard model to the feature points extracted from the 2D face images. The generated 3D facial model may be registered and stored as a 3D facial model of the user appearing in the 2D face images.

Alternatively, the facial recognition system 100 may generate the 3D facial model of the user using the 2D face images used for the face registration, and motion data of the 2D face images and the 3D standard model. The facial recognition system 100 may obtain direction data of the 2D face images through a motion sensor along with the 2D face images, and generate 3D data on the face of the user based on the direction data and matching information of the 2D face images. The 3D data on the face of the user may be a set of 3D points configuring a shape of the face of the user. The facial recognition system 100 may generate the 3D facial model of the user by matching the 3D data on the face of the user to the 3D standard model. The generated 3D facial model may be stored and registered as a 3D facial model of the user appearing in the 2D face images.

In process 120, the facial recognition system 100 obtains a 2D input image including a face region of the user through a camera. Although the facial recognition system 100 may perform facial recognition using a single 2D input image, example embodiments may not be limited thereto. In operation 160 of process 120, the facial recognition system 100 adjusts the prestored 3D facial model of the user based on the facial pose or expression appearing in the 2D input image. The facial recognition system 100 may adjust a pose of the 3D facial model to match the facial pose appearing in the 2D input image, and adjust an expression of the 3D facial model to match the facial expression appearing in the 2D input image.

The facial recognition system 100 generates a 2D projection image from the 3D facial model matched to the 2D input image used for the facial recognition. In operation 170 of process 120, the facial recognition system 100 performs the facial recognition by comparing the 2D input image to the 2D projection image and outputs a result of the facial recognition. For example, the facial recognition system 100 may determine a degree of similarity between a face region in the 2D input image and a face region in the 2D projection image, and output the result of the facial recognition as "facial recognition successful" in a case of the degree of similarity satisfying a predetermined and/or desired condition, and output "facial recognition failed" in other cases.

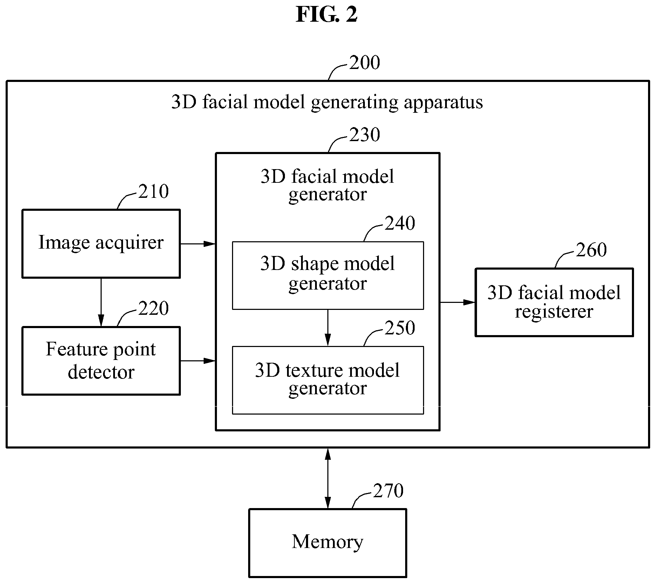

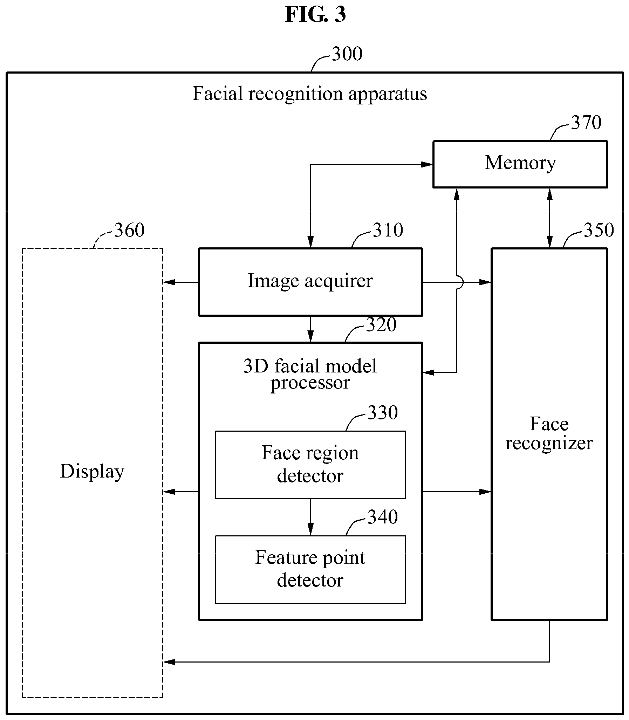

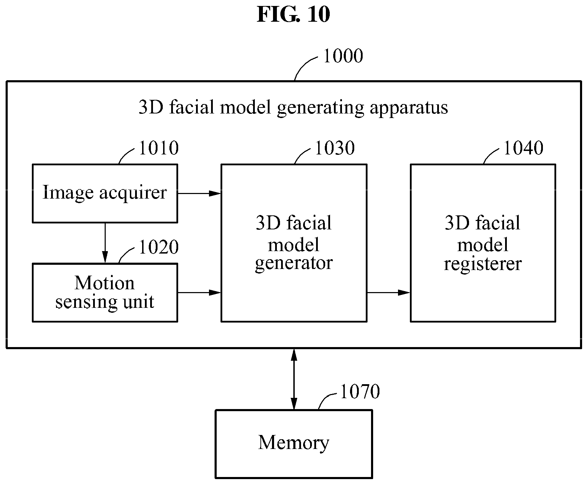

The facial recognition system 100 may include any one of a 3D facial model generating apparatus (e.g., a 3D facial model generating apparatus 200 of FIG. 2, a 3D facial model generating apparatus 1000 of FIG. 10), and a facial recognition apparatus (e.g., a facial recognition apparatus 300 of FIG. 3). The process 110 of registering the 3D facial model of the user may be performed by the 3D facial model generating apparatus 200 or the 3D facial model generating apparatus 1000. The process 120 of recognizing the face of the user from the 2D input image may be performed by the facial recognition apparatus 300.

FIG. 2 is a diagram illustrating a configuration of the 3D facial model generating apparatus 200 according to at least one example embodiment. The 3D facial model generating apparatus 200 may generate a 3D facial model of a face of a user from a plurality of 2D face images used for face registration. The 3D facial model generating apparatus 200 may generate a 3D shape model and a 3D texture model as the 3D facial model, and register the generated 3D shape model and the generated 3D texture model as the 3D facial model of the user. Referring to FIG. 2, the 3D facial model generating apparatus 200 includes an image acquirer 210, a feature point detector 220, a 3D facial model generator 230, and a 3D facial model registerer 260. The image acquirer 210, the feature point detector 220, the 3D facial model generator 230 and the 3D facial model registerer 260 may be implemented using hardware components and/or hardware components executing software components as is described below.

In the event where at least one of the image acquirer 210, the feature point detector 220, the 3D facial model generator 230 and the 3D facial model registerer 260 is a hardware component executing software, the hardware component is configured as a special purpose machine to execute the software, stored in a memory (non-transitory computer-readable medium) 270, to perform the functions of the at least one of the image acquirer 210, the feature point detector 220, the 3D facial model generator 230 and the 3D facial model registerer 260.

While the memory 270 is illustrated outside of the 3D facial model generating apparatus 200, the memory 270 may be included in the 3D facial model generating apparatus 200.

The image acquirer 210 obtains the 2D face images of the user for the face registration. The 2D face images may include a face region of the user including various facial poses. For example, the image acquirer 210 obtains the 2D face images captured through a camera from a plurality of viewpoints such as a front image or a profile image. Information on an overall 2D shape of the face of the user and texture information of the face of the user may be extracted from the front image, and detailed information on a shape of the face of the user may be extracted from the profile image. For example, information on a 3D shape of the face of the user may be determined by the 3D facial model generating apparatus 200 by comparing a face region of the user in the front image to a face region of the user in the profile image. According to an example embodiment, the image acquirer 210 may capture the 2D face images through a camera to register a 3D facial model, and the image acquirer 210 may store the 2D face images captured through the camera in the memory 270.

The feature point detector 220 detects a face region from a 2D face image and facial feature points or landmarks in the detected face region. For example, the feature point detector 220 may detect feature points positioned on contours of eyebrows, eyes, a nose, lips, and/or a chin from the 2D face images. According to an example embodiment, the feature point detector 220 may detect the facial feature points from the 2D face images using an active shape model (ASM), an active appearance model (AAM), or a supervised descent method (SDM).

The 3D facial model generator 230 generates the 3D facial model on the face of the user based on the feature points detected from the 2D face images. A deformable 3D shape model and a deformable 3D texture model on the face of the user may be generated as the 3D facial model. The 3D facial model generator 230 includes a 3D shape model generator 240 and a 3D texture model generator 250.

The 3D shape model generator 240 generates the 3D shape model of the face of the user using the 2D face images captured from different viewpoints. The 3D shape model refers to a 3D model having a shape without a texture. The 3D shape model generator 240 generates the 3D shape model based on the facial feature points detected from the 2D face images. The 3D shape model generator 240 determines a parameter to map the feature points detected from the 2D face images to feature points of a 3D standard model, and generates the 3D shape model by applying the determined parameter to the 3D standard model. For example, the 3D shape model generator 240 may generate the 3D shape model of the face of the user by matching feature points of eyebrows, eyes, a nose, lips, and/or a chin detected from the 2D face images to the feature points of the 3D standard model.

Generating a 3D shape model using 2D face images captured from different viewpoints may enable generation of a more detailed 3D shape model. In a case of generating a 3D shape model only using a front image obtained by capturing a face of a user from a front side, determining a 3D shape such as a height of a nose and a shape of cheekbones in the 3D shape model may not be easy. However, in a case of generating a 3D shape model using a plurality of 2D face images captured from different viewpoints, a more detailed 3D shape model may be generated because information on, for example, a height of a nose and a shape of cheekbones, may be additionally considered.

The 3D texture model generator 250 generates the 3D texture model based on texture information extracted from at least one of the 2D face images and the 3D shape model. For example, the 3D texture model generator 250 may generate a 3D texture model by mapping a texture extracted from a front image to the 3D shape model. The 3D texture model refers to a model having both a shape and a texture of a 3D model. The 3D texture model may have a higher level of detail than the 3D shape model, and include vertexes of the 3D shape model. The 3D shape model and the 3D texture model may have a fixed shape of a 3D model, and a deformable pose and expression. The 3D shape model and the 3D texture model may have an identical or similar pose and expression by an identical parameter.

The 3D facial model registerer 260 registers and stores the 3D shape model and the 3D texture model as a 3D facial model of the user. For example, when a user of a 2D face image obtained by the image acquirer 210 is "A," the 3D facial model registerer 260 may register a 3D shape model and a 3D texture model generated with respect to A as a 3D facial model of A and the memory 270 may store the 3D shape model and the 3D texture model of A.

FIG. 3 is a diagram illustrating a configuration of a facial recognition apparatus 300 according to at least one example embodiment. The facial recognition apparatus 300 may perform facial recognition for a user appearing in a 2D input image used for the facial recognition using a registered 3D facial model. The facial recognition apparatus 300 may generate a 2D projection image by rotating the 3D facial model to allow the 3D facial model to have a facial pose identical or similar to a facial pose of the user appearing in the 2D input image. The facial recognition apparatus 300 may perform the facial recognition by comparing the 2D projection image to the 2D input image. The facial recognition apparatus 300 may provide a facial recognition method robust against a change in a pose of the user by matching the registered 3D facial model to the facial pose appearing in the 2D input image and performing the facial recognition. Referring to FIG.

3, the facial recognition apparatus 300 includes an image acquirer 310, a 3D facial model processor 320, and a face recognizer 350. The 3D facial model processor 320 includes a face region detector 330 and a feature point detector 340.

The image acquirer 310, the 3D facial model processor 320 (including the face region detector 330 and the feature point detector 340), and the face recognizer 350 may be implemented using hardware components and/or hardware components executing software components as is described below.

In the event where at least one of the image acquirer 310, the 3D facial model processor 320 (including the face region detector 330 and the feature point detector 340), and the face recognizer 350 is a hardware component executing software, the hardware component is configured as a special purpose machine to execute the software, stored in a memory (non-transitory computer-readable medium) 370, to perform the functions of the at least one of the image acquirer 310, the 3D facial model processor 320 (including the face region detector 330 and the feature point detector 340), and the face recognizer 350.

While the memory 370 is illustrated as part of the facial recognition apparatus 300, the memory 370 may be separate from the facial recognition apparatus 300.

The image acquirer 310 obtains a 2D input image for recognizing a face including a face region of a user. The image acquirer 310 obtains a 2D input image for recognizing or authenticating the user through a camera or the like. Although the facial recognition apparatus 300 may perform facial recognition on the user using a single 2D input image, example embodiments are not limited thereto.

The face region detector 330 detects the face region of the user from the 2D input image. The face region detector 330 identifies the face region from the 2D input image using information on a brightness distribution, a movement of an object, a color distribution, an eye location, and the like of the 2D input image, and extracts location information of the face region. For example, the face region detector 330 detects the face region from the 2D input image using a Haar-based cascade Adaboost classifier which is generally used in related technical fields.

The feature point detector 340 detects a facial feature point from the face region of the 2D face image. For example, the feature point detector 340 detects, from the face region, feature points including eyebrows, eyes, a nose, lips, a chin, hair, ears, and/or a facial contour. According to an example embodiment, the feature point detector 340 detects the facial feature point from the 2D input image using an ASM, an AAM, or an SDM.

The 3D facial model processor 320 adjusts a prestored 3D facial model based on the detected feature point. The 3D facial model processor 320 matches the 3D facial model to the 2D input image based on the detected feature point. Based on a result of the matching, the 3D facial model may be transformed to be matched to a facial pose and expression appearing in the 2D input image. The 3D facial model processor 320 adjusts a pose and an expression of the 3D facial model by mapping the feature point detected from the 2D input image to the 3D facial model. The 3D facial model may include a 3D shape model and a 3D texture model. The 3D shape model may be used to be fast matched to the facial pose appearing in the 2D input image, and the 3D texture model may be used to generate a high-resolution 2D projection image.

The 3D facial model processor 320 adjusts a pose of the 3D shape model based on the pose appearing in the 2D input image. The 3D facial model processor 320 matches the pose of the 3D shape model to the pose appearing in the 2D input image by matching the feature point detected from the 2D input image to feature points of the 3D shape model. The 3D facial model processor 320 adjusts a pose parameter and an expression parameter of the 3D shape model based on the feature point detected from the 2D input image.

In addition, the 3D facial model processor 320 adjusts the 3D texture model based on parameter information of the 3D shape model. The 3D facial model processor 320 applies, to the 3D texture model, the pose parameter and the expression parameter determined in the matching of the 3D shape model to the 2D input image. Based on a result of the applying, the 3D texture model may be adjusted to have a pose and an expression identical or similar to the pose and the expression of the 3D shape model. Subsequent to the adjusting of the 3D texture model, the 3D facial model processor 320 may generate the 2D projection image by projecting the adjusted 3D texture model to a plane.

The face recognizer 350 performs the facial recognition by comparing the 2D projection image to the 2D input image. The face recognizer 350 performs the facial recognition based on a degree of similarity between the face region appearing in the 2D input image and a face region appearing in the 2D projection image. The face recognizer 350 determines the degree of similarity between the 2D input image and the 2D projection image, and outputs a result of the facial recognition based on whether the determined degree of similarity satisfies a predetermined and/or desired condition.

The face recognizer 350 may use a feature value determining method which is generally used in a field of facial recognition technology to determine the degree of similarity between the 2D input image and the 2D projection image. For example, the face recognizer 350 may determine the degree of similarity between the 2D input image and the 2D projection image using a feature extracting filter such as a Gabor filter, a local binary pattern (LBP), a histogram of oriented gradient (HoG), a principal component analysis (PCA), and a linear discriminant analysis (LDA). The Gabor filter refers to a filter to extract a feature from an image using a multifilter having various magnitudes and angles. The LBP refers to a filter to extract a difference between a current pixel and an adjacent pixel as a feature from an image.

According to an example embodiment, the face recognizer 350 may divide the face region appearing in the 2D input image and the 2D projection image into cells of a predetermined and/or selected size and calculate a histogram associated with the LBP for each cell, for example, a histogram on LBP index values included in a cell. The face recognizer 350 determines a vector obtained by linearly connecting the calculated histograms to be a final feature value, and compare a final feature value of the 2D input image to a final feature value of the 2D projection image to determine the degree of similarity between the 2D input image and the 2D projection image.

According to an example embodiment, the facial recognition apparatus 300 further includes a display 360. The display 360 displays the 2D input image, the 2D projection image, and/or the result of the facial recognition. In a case that the user determines that a face of the user is not properly captured based on the displayed 2D input image, or the display 360 displays a final result of the facial recognition to be a failure, the user may re-capture the face and the facial recognition apparatus 300 may re-perform facial recognition on a 2D input image generated by the re-capturing.

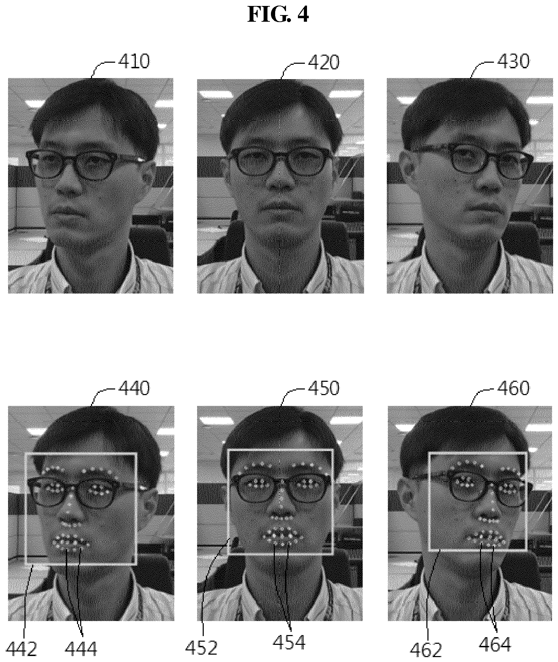

FIG. 4 illustrates a process of detecting feature points from 2D face images according to at least one example embodiment. Referring to FIG. 4, an image 420 is a 2D face image obtained by a 3D facial model generating apparatus by capturing a face of a user from a front side, and an image 410 and an image 430 are 2D face images obtained by the 3D facial model generating apparatus (e.g., 200 and 1000) by capturing the face of the user from profile sides. Information on an overall 2D shape of the face of the user and texture information of the face of the user may be extracted by the 3D facial model generating apparatus (e.g., 200 and 1000) from the image 420. More detailed information on a shape of the face may be extracted from the images 410 and 430. For example, a basic model on the face of the user may be set based on the shape of the face of the user extracted from the image 420, and a 3D shape of the basic model may be determined by the 3D facial model generating apparatus (e.g., 200 and 1000) based on the shape of the face of the user extracted from the images 410 and 430.

The feature point detector 220 of the 3D facial model generating apparatus 200 of FIG. 2 may detect facial feature points from 2D face images captured from a plurality of viewpoints such as the images 410, 420, and 430. The facial feature points refer to feature points located in contour regions of eyebrows, eyes, a nose, lips, a chin, and the like. The feature point detector 220 may detect the facial feature points from the images 410, 420, and 430 using an ASM, an AAM, or an SDM which is generally used in related technical fields. Initialization of a pose, a scale, or a location of the ASM, the AAM, or the SDM model may be performed based on a result of face detection.

An image 440 is a resulting image from which feature points 444 are detected within a face region 442 of the image 410. An image 450 is a resulting image from which feature points 454 are detected within a face region 452 of the image 420. Similarly, an image 460 is a resulting image from which feature points 464 are detected within a face region 462 of the image 430.

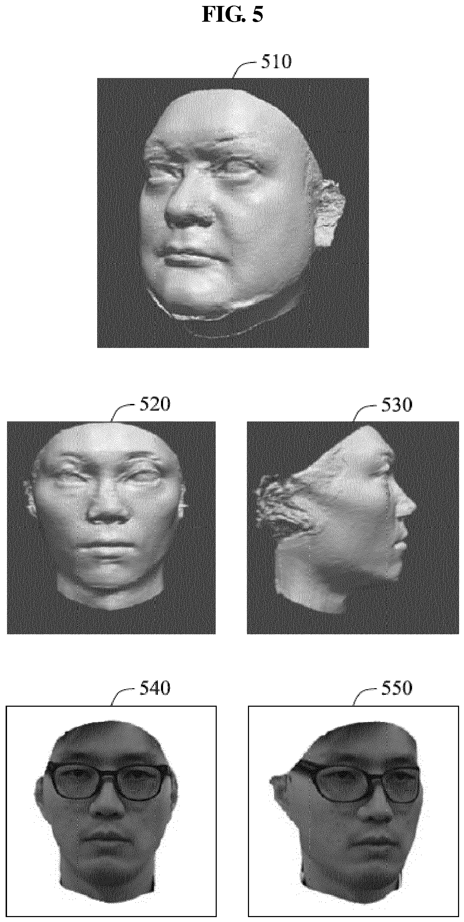

FIG. 5 illustrates a process of generating a 3D facial model using a 3D standard model according to at least one example embodiment. Referring to FIG. 5, a model 510 indicates a 3D standard model. The 3D standard model, which is a deformable 3D shape model generated based on 3D face training data, may be a parametric model indicating an identity of a face of a user through an average shape and parameter.

The 3D standard model may include an average shape and a quantity of a change in a shape as expressed in Equation 1. The quantity of a change in a shape indicates a weighted sum of a shape parameter and a shape vector.

[Equation 1]

$$\overline{S} = \overline{S}_0 + \sum_i \overline{p}_i \overline{S}_i$$

In Equation 1, "$\overline{S}$" denotes elements configuring a 3D shape of a 3D standard model, and "$\overline{S}_0$" denotes elements associated with an average shape of the 3D standard model. "$\overline{S}_i$" denotes shape elements corresponding to an index factor "i," and "$\overline{p}_i$" denotes a shape parameter to be applied to the shape elements corresponding to the index factor i.

$\overline{S}$ may include coordinates of 3D points as expressed in Equation 2.

[Equation 2]

$$\overline{S} = \left( \overline{x}_0, \overline{y}_0, \overline{z}_0, \overline{x}_1, \overline{y}_1, \overline{z}_1, \cdots, \overline{x}_{\overline{v}}, \overline{y}_{\overline{v}}, \overline{z}_{\overline{v}} \right)^T$$

In Equation 2, "$\overline{S}$" denotes a variable indicating an index of 3D points, for example, $\overline{x}$, $\overline{y}$, and $\overline{z}$, and "T" denotes "transpose."

The 3D shape model generator 240 of the 3D facial model generating apparatus 200 of FIG. 2 may individualize a 3D standard model based on 2D face images captured from a plurality of viewpoints to register a face of a user. The 3D shape model generator 240 may determine a parameter to match feature points included in the 3D standard model to facial feature points detected from the 2D face images, and generate a 3D shape model on the face of the user by applying the determined parameter to the 3D standard model.

Referring to FIG. 5, a model 520 and a model 530 are 3D shape models of the face of the user generated from the model 510, which is the 3D standard model. The model 520 indicates a 3D shape model viewed from a front side, and the model 530 indicates a 3D shape model viewed from a profile side. A 3D shape model may have shape information without texture information, and be used to be matched to a 2D input image at a high speed in a process of user authentication.

The 3D texture model generator 250 of FIG. 2 may generate a 3D texture model by mapping a texture extracted from at least one of the 2D face images to a surface of the 3D shape model. For example, the mapping of the texture to the surface of the 3D shape model may indicate adding depth information obtained from the 3D shape model to the texture information extracted from a 2D face image captured from a front side.

A model 540 and a model 550 are 3D texture models generated based on the 3D shape model. The model 540 indicates a 3D texture model viewed from a front side, and the model 550 indicates a 3D texture model viewed from a diagonal direction. A 3D texture model may be a model including both shape information and texture information and used to generate a 2D projection image in the process of user authentication.

The 3D shape model and the 3D texture model are a 3D model in which a face shape indicating a unique characteristic of the user is fixed and a pose or an expression is deformable. The 3D texture model may have a higher level of detail and include a greater number of vertexes compared to the 3D shape model. Vertexes included in the 3D shape model may be a subset of the vertexes included in the 3D texture model. The 3D shape model and the 3D texture model may indicate an identical or similar pose and expression by an identical parameter.

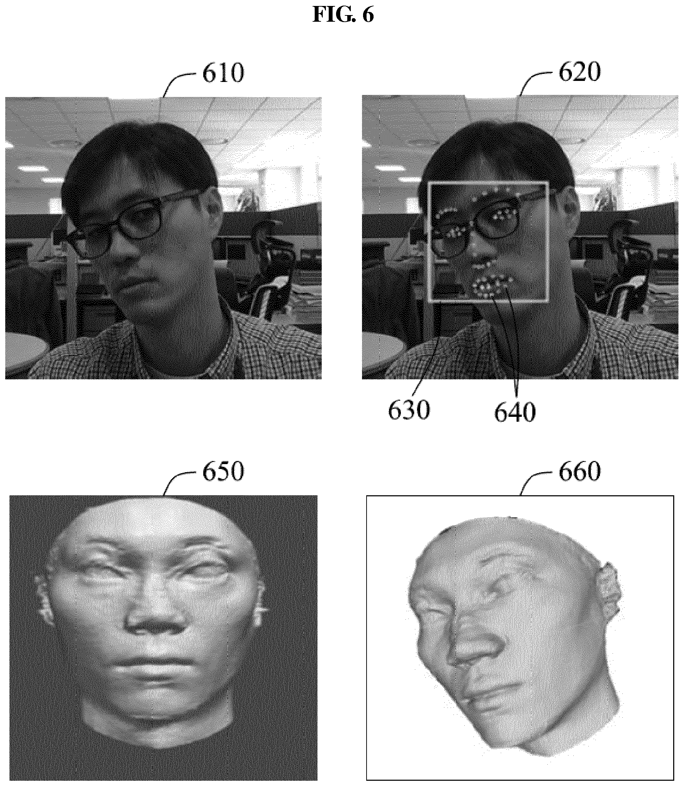

FIG. 6 illustrates a process of adjusting a 3D facial model based on a feature point detected from a 2D input image according to at least one example embodiment. Referring to FIG. 6, an image 610 is a 2D input image input to a facial recognition apparatus for facial recognition or user authentication, and indicates a face pose image captured through a camera.

The face region detector 330 of the facial recognition apparatus 300 of FIG. 3 may detect a face region from the 2D input image, and the feature point detector 340 of FIG. 3 may detect feature points located on a contour of eyes, eyebrows, a nose, lips, or a chin in the detected face region. For example, the feature point detector 340 may detect a facial feature point from the 2D input image using an ASM, an AAM, or an SDM.

An image 620 is a resulting image obtained by detecting a face region 630 from the image 610 by the face region detector 330 and detecting feature points 640 within the face region 630 by the feature point detector 340.

The 3D facial model processor 320 may match a preregistered and stored 3D shape model to the 2D input image. The 3D facial model processor 320 may adjust a parameter of the 3D shape model based on the facial feature point detected from the 2D input image to adjust a pose and an expression. A model 650 is a preregistered and stored 3D shape model of a face of a user, and a model 660 is a 3D shape model in which a pose and an expression are adjusted based on the feature points 640 detected from the image 610. The 3D facial model processor 320 may adjust a pose of the prestored 3D shape model to be identical or similar to a facial pose appearing in the 2D input image. The face of the user takes a laterally rotated pose in the image 610, which is the 2D input image, and the 3D shape model in which the pose is adjusted by the 3D facial model processor 320 takes a laterally rotated pose identical or similar to the pose of the user in the image 610.

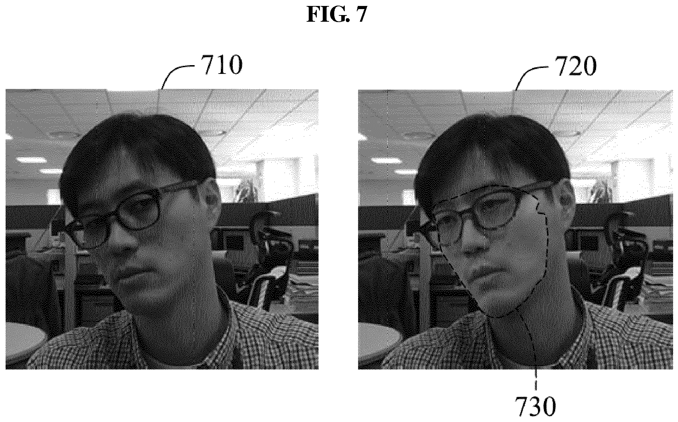

FIG. 7 illustrates a process of performing facial recognition by comparing a 2D input image to a 2D projection image according to at least one example embodiment. The 3D facial model processor 320 of the facial recognition apparatus 300 of FIG. 3 may adjust a pose parameter and an expression parameter of a 3D shape model based on a facial feature point detected from a 2D input image used for facial recognition. The 3D facial model processor 320 may apply the adjusted pose parameter and the adjusted expression parameter of the 3D shape model to a 3D texture model to adjust a pose and an expression of the 3D texture model to be identical or similar to the pose and the expression of the 3D shape model. Subsequently, the 3D facial model processor 320 may generate a 2D projection image by projecting the 3D texture model to an image plane. The face recognizer 350 may perform the facial recognition based on a degree of similarity between the 2D input image and the 2D projection image, and output a result of the facial recognition.

Referring to FIG. 7, an image 710 is a 2D input image used for facial recognition. An image 720 is a reference image to be compared to the image 710, which is the 2D input image, for the face recognizer 350 to perform the facial recognition. A region 730 included in the image 720 indicates a region in which a 2D projection image generated from a 3D texture model is reflected. For example, the image 730 may be a face region obtained by projecting, to an image plane, the texture model to which a texture is mapped to the 3D shape model 660 of FIG. 6. The face recognizer 350 may perform the facial recognition by comparing a face region of a user appearing in the 2D input image to the face region appearing in the 2D projection image. Alternatively, the face recognizer 350 may perform the facial recognition by comparing the image 710, which is the 2D input image, to an overall region of the image 720, which is a resulting image obtained by reflecting the 2D projection image in the 2D input image.

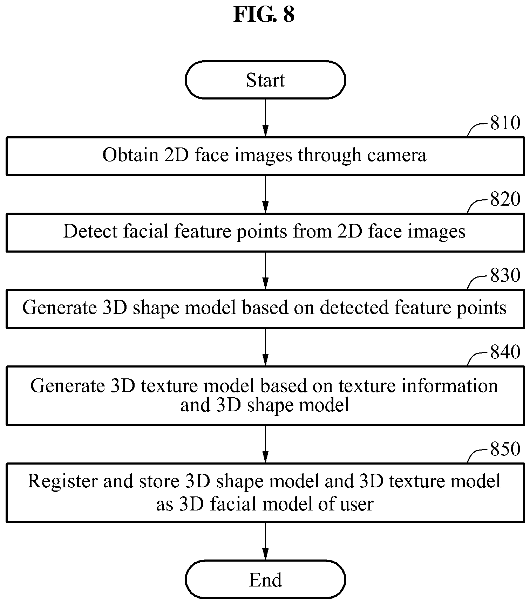

FIG. 8 is a flowchart illustrating a 3D facial model generating method according to at least one example embodiment.

Referring to FIG. 8, in operation 810, a 3D facial model generating apparatus obtains 2D face images of a user captured through a camera from different viewpoints. The 2D face images may be used to register a face of the user. For example, the 2D face images may include images including various facial poses such as a front and a profile image.

In operation 820, the 3D facial model generating apparatus detects facial feature points from the 2D face images. For example, the 3D facial model generating apparatus may detect facial feature points located on a contour of eyebrows, eyes, a nose, lips, a chin, and the like from the 2D face images using an ASM, an AAM, or an SDM which is generally known in related technical fields.

In operation 830, the 3D facial model generating apparatus generates a 3D shape model based on the detected feature points. The 3D facial model generating apparatus may generate the 3D shape model by matching the feature points of the eyebrows, the eyes, the nose, the lips, the chin, and the like detected from the 2D face images to feature points of a 3D standard model. The 3D facial model generating apparatus determines a parameter to map the feature points detected from the 2D face images to the feature points of the 3D standard model, and generate the 3D shape model by applying the determined parameter to the 3D standard model.

In operation 840, the 3D facial model generating apparatus generates a 3D texture model based on the 3D shape model and texture information extracted from a 2D face image. The 3D facial model generating apparatus may generate the 3D texture model on the face of the user by mapping a texture extracted from at least one 2D face image to the 3D shape model. The 3D texture model to which a parameter of the 3D shape model is applied may have a pose and an expression identical or similar to the 3D shape model.

In operation 850, the 3D facial model generating apparatus registers and stores the 3D shape model and the 3D texture model as a 3D facial model of the user. The stored 3D shape model and the 3D texture model may be used to authenticate the user appearing in the 2D input image in a process of user authentication.

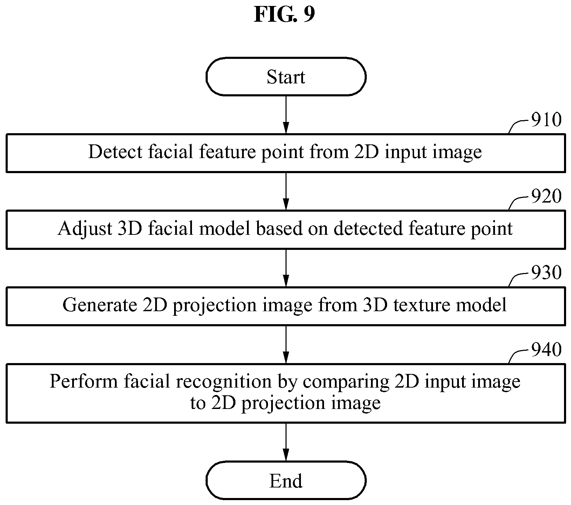

FIG. 9 is a flowchart illustrating a facial recognition method according to at least one example embodiment.

Referring to FIG. 9, in operation 910, a facial recognition apparatus detects a facial feature point from a 2D input image used for facial recognition. The facial recognition apparatus detects a face region from the 2D input image, and detects a facial feature points located on a contour of eyes, eyebrows, a nose, a chin, lips, and the like in the detected face region. For example, the facial recognition apparatus may detect the face region from the 2D input image using a Haar-based cascade Adaboost classifier, and detect the facial feature points within the face region using an ASM, an AAM, or an SDM.

In operation 920, the facial recognition apparatus adjusts a preregistered 3D facial model of a user based on the feature point detected from the 2D input image. The facial recognition apparatus may match the preregistered 3D facial model to the 2D input image based on the feature point detected from the 2D input image. The facial recognition apparatus may transform the 3D facial model to match a facial pose and expression of the 3D facial model to a facial pose and expression appearing in the 2D input image.

The 3D facial model may include a 3D shape model and a 3D texture model. The facial recognition apparatus may adjust a pose of the 3D shape model based on the feature point detected from the 2D input image, and adjust the 3D texture model based on parameter information of the 3D shape model in which the pose is adjusted. The facial recognition apparatus may adjust a pose parameter and an expression parameter of the 3D shape model based on the feature point detected from the 2D input image, and may apply the adjusted parameters of the 3D shape model to the 3D texture model. Based on a result of the applying of the parameters, the 3D texture model may be adjusted to have a pose and an expression identical or similar to the pose and the expression of the 3D shape model.

In operation 930, the facial recognition apparatus generates a 2D projection image from the 3D texture model. The facial recognition apparatus generates the 2D projection image by projecting, to a plane, the 3D texture model adjusted based on the 3D shape model in operation 920. A facial pose appearing in the 2D projection image may be identical or similar to the facial pose appearing in the 2D input image. For example, when the facial pose of the user appearing in the 2D input image is a pose facing a profile side, the 2D projection image generated through operations 910 through 930 may have a facial pose of the 3D texture model facing a profile side identical or similar to the 2D input image.

In operation 940, the facial recognition apparatus performs facial recognition by comparing the 2D input image to the 2D projection image. The facial recognition apparatus performs the facial recognition based on a degree of similarity between a face region appearing in the 2D input image and a face region appearing in the 2D projection image. The fade recognition apparatus determines the degree of similarity between the 2D input image and the 2D projection image, and outputs a result of the facial recognition based on whether the determined degree of similarity satisfies a predetermined and/or desired condition. For example, in a case that the degree of similarity between the 2D input image and the 2D projection image satisfies the predetermined and/or desired condition, the facial recognition apparatus may output a result of "facial recognition successful", and "facial recognition failed" in other cases

FIG. 10 is a diagram illustrating another example of a configuration of a 3D facial model generating apparatus 1000 according to at least one example embodiment. The 3D facial model generating apparatus 1000 may generate a 3D facial model of a face of a user from a plurality of 2D face images used for face registration. The 3D facial model generating apparatus 1000 may generate the 3D facial model of the user using the 2D face images captured from different directions, motion data on the 2D face images, and a 3D standard model. Referring to FIG. 10, the 3D facial model generating apparatus 1000 includes an image acquirer 1010, a motion sensing unit 1020, a 3D facial model generator 1030, and a 3D facial model registerer 1040.

The image acquirer 1010, the motion sensing unit 1020, the 3D facial model generator 1030, and the 3D facial model registerer 1040 may be implemented using hardware components and/or hardware components executing software components as is described below.

In the event where at least one of the image acquirer 1010, the motion sensing unit 1020, the 3D facial model generator 1030, and the 3D facial model registerer 1040 is a hardware component executing software, the hardware component is configured as a special purpose machine to execute the software, stored in a memory (non-transitory computer-readable medium) 1070, to perform the functions of the at least one of the image acquirer 1010, the motion sensing unit 1020, the 3D facial model generator 1030, and the 3D facial model registerer 1040.

While the memory 1070 is illustrated outside of the 3D facial model generating apparatus 1000, the memory 1070 may be included in the 3D facial model generating apparatus 1000.

The image acquirer 1010 obtains 2D face images captured from different viewpoints used for face registration. The image acquirer 1010 obtains the 2D face images in which a face of a user is captured through a camera from different directions. For example, the image acquirer 1010 may obtain the 2D face images captured from different viewpoints, for example, a front image and a profile image.

The motion sensing unit 1020 obtains direction data of the 2D face images. The motion sensing unit 1020 determines the direction data of the 2D face images using motion data sensed through various sensors. The direction data of the 2D face images may include information on a direction from which each 2D face image is captured. For example, the motion sensing unit 1020 may determine direction data of each 2D face image using an inertial measurement unit (IMU) such as an accelerometer, a gyroscope, and/or a magnetometer.

For example, the user may capture the face of the user by rotating a camera in different directions, and obtain the 2D face images captured from various viewpoints as a result of the capturing. During capture of the 2D face images, the motion sensing unit 1020 may calculate motion data including, for example, a change in a speed, a direction, a roll, a pitch, and a yaw of the camera capturing the 2D face images, based on sensing information output from the IMU, and determine the direction data on directions from which the 2D face images are captured.

The 3D facial model generator 1030 generates a 3D facial model of the user appearing in the 2D face images. The 3D facial model generator 1030 detects facial feature points or landmarks from the 2D face images. For example, the 3D facial model generator 1030 may detect feature points located on a contour of eyebrows, eyes, a nose, lips, a chin, and the like from the 2D face images. The 3D facial model generator 1030 determines information on matching points among the 2D face images based on the facial feature points detected from the 2D face images.

The 3D facial model generator 1030 generates 3D data of the face of the user based on information on the facial feature points detected from the 2D face images, the information on the matching points, and the direction data of the 2D face images. For example, the 3D facial model generator 1030 may generate the 3D data of the face of the user using an existing stereo matching method. The 3D data of the face of the user may be a set of 3D points configuring a shape or a surface of the face of the user.

The 3D facial model generator 1030 transforms a deformable 3D standard model to a 3D facial model of the user using the 3D data on the face of the user. The 3D facial model generator 1030 transforms the 3D standard model to the 3D facial model of the user by matching the 3D standard model to the 3D data on the face of the user. The 3D facial model generator 1030 transforms the 3D standard model to the 3D facial model of the user by matching feature points of the 3D data to feature points of the 3D standard model. The 3D facial model of the user may include a 3D shape model associated with a shape of the face of the user and/or a 3D texture model including texture information.

The 3D facial model registerer 1040 registers and stores the 3D facial model of the user generated by the 3D facial model generator 1030. The stored 3D facial model of the user may be used to recognize the face of the user and a shape of the 3D facial model may be transformed in a process of facial recognition.

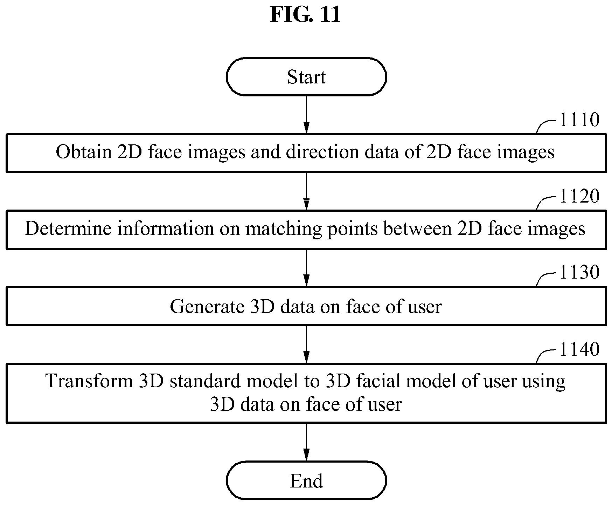

FIG. 11 is a flowchart illustrating another 3D facial model generating method according to at least one example embodiment.

Referring to FIG. 11, in operation 1110, a 3D facial model generating apparatus obtains a plurality of 2D face images used for face registration and direction data of the 2D face images. The 3D facial model generating apparatus obtains the 2D face images of a user captured through a camera from different viewpoints. The 3D facial model generating apparatus obtains the 2D face images in which a face of the user is captured from different directions, for example, a front image and a profile image.

The 3D facial model generating apparatus obtains the direction data of the 2D face images using motion data sensed by a motion sensor. For example, the 3D facial model generating apparatus may obtain direction data of each 2D face image using motion data sensed by an IMU including an accelerometer, a gyroscope, and/or a magnetometer. The direction data of the 2D face images may include information on a direction from which each 2D face image is captured.

In operation 1120, the 3D facial model generating apparatus determines information on matching points among the 2D face images. The 3D facial model generating apparatus detects facial feature points from the 2D face images, and detects the matching points based on the detected feature points.

In operation 1130, the 3D facial model generating apparatus generates 3D data on the face of the user. For example, the 3D data of the face of the user may be a set of 3D points configuring a shape or a surface of the face of the user, and include a plurality of vertexes. The 3D facial model generating apparatus generates the 3D data of the face of the user based on information of the facial feature points detected from the 2D face images, the information on the matching points, and the direction data of the 2D face images. The 3D facial model generating apparatus may generate the 3D data of the face of the user using an existing stereo matching method.

In operation 1140, the 3D facial model generating apparatus transforms a 3D standard model to a 3D facial model of the user using the 3D data generated in operation 1130. The 3D facial model generating apparatus transforms the 3D standard model to the 3D facial model of the user by matching the 3D standard model to the 3D data on the face of the user. The 3D facial model generating apparatus generates the 3D facial model of the user by matching feature points of the 3D standard model to feature points of the 3D data. The 3D facial model generating apparatus generates a 3D shape model and/or a 3D texture model as the 3D facial model of the user. The generated 3D facial model of the user may be stored and registered, and be used to recognize the face of the user.

The units and/or modules described herein may be implemented using hardware components and/or hardware components executing software components. For example, the hardware components may include microphones, amplifiers, band-pass filters, audio to digital convertors, and processing devices. A processing device may be implemented using one or more hardware device configured to carry out and/or execute program code by performing arithmetical, logical, and input/output operations. The processing device(s) may include a processor, a controller and an arithmetic logic unit, a digital signal processor, a microcomputer, a field programmable array, a programmable logic unit, a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciated that a processing device may include multiple processing elements and multiple types of processing elements. For example, a processing device may include multiple processors or a processor and a controller. In addition, different processing configurations are possible, such a parallel processors.

The software may include a computer program, a piece of code, an instruction, or some combination thereof, to independently or collectively instruct and/or configure the processing device to operate as desired, thereby transforming the processing device into a special purpose processor. Software and data may be embodied permanently or temporarily in any type of machine, component, physical or virtual equipment, computer storage medium or device, or in a propagated signal wave capable of providing instructions or data to or being interpreted by the processing device. The software also may be distributed over network coupled computer systems so that the software is stored and executed in a distributed fashion. The software and data may be stored by one or more non-transitory computer readable recording mediums.

The methods according to the above-described example embodiments may be recorded in non-transitory computer-readable media including program instructions to implement various operations of the above-described example embodiments. The media may also include, alone or in combination with the program instructions, data files, data structures, and the like.

The program instructions recorded on the media may be those specially designed and constructed for the purposes of example embodiments, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher level code that may be executed by the computer using an interpreter. The above-described devices may be configured to act as one or more software modules in order to perform the operations of the above-described example embodiments, or vice versa.

A number of example embodiments have been described above. Nevertheless, it should be understood that various modifications may be made to these example embodiments. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

**Claims**

1.  A facial recognition method, comprising:

    - generating an individualized three-dimensional, 3D, facial model by:

        - obtaining (810) two-dimensional, 2D, face images of a user from a plurality of viewpoints;
        - detecting (820) facial feature points from the two dimensional face images;
        - generating (830, 840) a deformable 3D shape model and a deformable 3D texture model based on the detected facial feature points; and
        - storing (850) the deformable 3D shape model and the deformable 3D texture model as an individualized three-dimensional facial model of the user;

    - detecting (910) a facial feature point from a two-dimensional input image to be recognized;
    - adjusting (920) the stored individualized three-dimensional facial model by matching the stored individualized three-dimensional facial model of the user to the two-dimensional input image at a viewpoint identical or similar to a viewpoint in the two-dimensional input image;
    - generating (930) a two-dimensional projection image from the individualized three-dimensional facial model, wherein generating the two-dimensional projection image from the adjusted 3D facial model comprises projecting the adjusted three-dimensional facial model matched to the 2D input image at a viewpoint identical or similar to a viewpoint in the 2D input image, the facial pose appearing in the 2D projection image being identical or similar to a facial pose of the user appearing in the 2D input image; and
    - performing facial recognition (940) by comparing the two-dimensional input image and the two-dimensional projection image.

2.  Method as claimed in claim 1, wherein the adjusting the stored three-dimensional facial model comprises adjusting a facial pose and a facial expression of the stored three-dimensional facial model by mapping the detected facial feature point to the stored three-dimensional facial model.

3.  Method as claimed in claim 1, wherein the adjusting the stored individualized three-dimensional facial model comprises adjusting a pose parameter and an expression parameter of the 3D shape model based on the detected facial feature point.

4.  Method as claimed in claim 1, wherein the generating comprises:

    determining a parameter to map the detected facial feature points to feature points of a 3D standard model; and generating the deformable 3D shape model by applying the determined parameter to the 3D standard model.

5.  The facial recognition method of any of the preceding claims, wherein the generating generates the deformable 3D texture model based on the deformable 3D shape model and texture information from at least one of the 2D face images.

6.  The method of any of the preceding claims, wherein the generating comprises:

    determining a parameter to map detected facial feature points to feature points of a 3D standard model; and generating the deformable 3D shape model by applying the determined parameter to the 3D standard model, and/or

wherein the deformable 3D texture model comprises vertexes of the deformable 3D shape model, and/or wherein the 2D face images comprise images of a face of the user from different viewpoints.

7. The method of claim 1, wherein the stored individualized 3D facial model includes a 3D shape model and a 3D texture model, and
the adjusting the stored individualized 3D facial model comprises:

adjusting the stored individualized 3D shape model based on the facial feature point detected from the 2D input image; and
adjusting the 3D texture model based on parameter information of the adjusted 3D shape model.

8. The method of any of the preceding claims, wherein the 3D shape model and the 3D texture model are 3D models in which a facial pose and a facial expression are deformable, and/or
wherein the 2D projection image includes a facial pose identical to a facial pose in the 2D input image, and/or
wherein the performing the facial recognition comprises:

determining a degree of similarity between the 2D input image and the 2D projection image; and
outputting a result of the facial recognition based on whether the degree of similarity satisfies a condition, and/or
wherein the detecting the facial feature point comprises:

extracting a face region from the 2D input image; and
detecting the facial feature point in at least one of eyebrows, eyes, a nose, lips, a chin, ears, and a facial contour from the extracted face region.

9. The facial recognition method of any of the preceding claims, comprising the generating a three-dimensional facial model, comprising:

obtaining two-dimensional face images and direction data of the 2D face images, the 2D face images including a face of a user;
determining information on matching points among the 2D face images;
generating 3D data of the face of the user based on the direction data of the 2D face images and the information on the matching points; and
transforming a 3D standard model to a 3D facial model of the user using the 3D data.

10. The method of claim 9, wherein the transforming transforms the 3D standard model to the 3D facial model of the user by matching the 3D standard model to the 3D data of the face of the user, and/or
wherein the 3D data of the face of the user is a set of 3D points configuring a shape of the face of the user, and/or
wherein the obtaining obtains the direction data of the 2D face images using motion data sensed by a motion sensor, and/or
wherein the determining comprises:

detecting facial feature points from the 2D face images; and
determining the information on the matching points based on the detected facial feature points.

11. A non-transitory computer-readable medium comprising program code that, when executed by a processor, causes the processor to perform the method of one of the previous claims.

12. A facial recognition apparatus (300), comprising:

an image acquirer (210) configured to obtain two-dimensional, 2D, face images of a user from a plurality of viewpoints;
a feature point detector (220) configured to detect facial feature points from the 2D face images;
a 3D facial model generator (230) configured to generate a deformable 3D shape model and a deformable 3D texture model based on the detected facial feature points; and
a 3D facial model registerer (260) configured to store the deformable 3D shape model and the deformable 3D texture model as an individualized three-dimensional facial model of the user;
an image acquirer (310) configured to obtain a two-dimensional input image to be recognized, the two-dimensional input image comprising a face region of a user, the image acquirer being configured to detect a facial feature point from the two-dimensional input image to be recognized;

a three-dimensional facial model processor (320) configured to adjust a facial pose of the stored individualized three-dimensional facial model based on a facial pose of the user appearing in the 2D input image and generate a two-dimensional projection image from the adjusted individualized three-dimensional facial model matched to the 2D input image at a viewpoint identical or similar to a viewpoint in the 2D input image, the facial pose appearing in the 2D projection image being identical or similar to a facial pose of the user appearing in the 2D input image; and

a face recognizer (350) configured to perform facial recognition by comparing the two-dimensional input image and the two-dimensional projection image.

13. Facial recognition apparatus of claim 12, wherein the three-dimensional facial model processor is configured to:

- adjust a facial pose and a facial expression of the stored three-dimensional facial model by mapping the detected facial feature point to the stored three-dimensional facial model; and/or
- adjust the stored individualized three-dimensional facial model by adjusting a pose parameter and an expression parameter of the 3D shape model based on the detected facial feature point; and/or

wherein the 3D facial model generator is configured to determine a parameter to map the detected facial feature points to feature points of a 3D standard model and to generate the deformable 3D shape model by applying the determined parameter to the 3D standard model.

14. The apparatus of claim 12 or 13, wherein the 3D facial model processor comprises:

a face region detector configured to detect the face region from the 2D input image; and
a feature point detector configured to detect a facial feature point from the detected face region, and/or
wherein the 3D facial model processor is configured to detect the facial feature point from the 2D input image, and adjust the facial pose of the stored individualized 3D facial model by matching the detected facial feature point to a feature point of the stored individualized 3D facial model, and/or
wherein the stored individualized 3D facial model comprises a 3D shape model and a 3D texture model, and the 3D facial model processor is configured to adjust a facial pose of the 3D shape model based on the facial pose of the user appearing in the 2D input image and adjust the 3D texture model based on parameter information of the adjusted 3D shape model, and/or
wherein the 3D facial model processor is configured to generate the 2D projection image by projecting the adjusted 3D texture model to a plane.

15. The apparatus of claim 12, 13 or 14, further comprising:
a display configured to display at least one of one of the 2D input images, the 2D projection image, and a result of the facial recognition.

16. The apparatus of any of claims 12-15, wherein the 3D facial model generator is configured to determine a parameter to map the detected facial feature points to feature points of a 3D standard model, and generate the deformable 3D shape model by applying the determined parameter to the 3D standard model, and/or
wherein the 3D facial model generator comprises:

a 3D shape model generator configured to generate the deformable 3D shape model of a face of the user based on the detected facial feature points; and
a 3D texture model generator configured to generate the deformable 3D texture model based on the deformable 3D shape model and texture information from at least one of the 2D face images.

17. The apparatus according to one of the claims 12-16, comprising:

an image acquirer configured to obtain two-dimensional face images of a user from a plurality of viewpoints;
a motion sensing unit configured to obtain direction data of the 2D face images;
a 3D facial model generator configured to generate 3D data of a face of the user based on information on matching points among the 2D face images and the direction data of the 2D face images, the 3D facial model generator being configured to transform a 3D standard model to a 3D facial model of the user using the 3D data; and
a 3D facial model registerer configured to store the 3D facial model of the user;

to generate a three dimensional facial model,
wherein preferably the 3D facial model generator is configured to detect facial feature points from the 2D face images, and determine the information on the matching points based on the detected facial feature points, and/or wherein the 3D facial model generator is preferably configured to transform the 3D standard model to the 3D facial model of the user by matching the 3D standard model to the 3D facial model of the face of the user.

**Patentansprüche**

1. Verfahren zur Gesichtserkennung, das Folgendes umfasst:

   - Erzeugen eines individualisierten dreidimensionalen (3D) Gesichtsmodells durch:

     - Erhalten (810) von zweidimensionalen (2D) Gesichtsbildern eines Benutzers aus einer Vielzahl von Blickpunkten;
     - Erfassen (820) von Gesichtsmerkmalspunkten in den zweidimensionalen Gesichtsbildern;
     - Erzeugen (830, 840) eines verformbaren 3D-Formmodells und eines verformbaren 3D-Texturmodells auf der Grundlage der erfassten Gesichtsmerkmalspunkte; und
     - Speichern (850) des verformbaren 3D-Formmodells und des verformbaren 3D-Texturmodells als ein individualisiertes dreidimensionales Gesichtsmodell des Benutzers;

   - Erfassen (910) eines Gesichtsmerkmalspunkts in einem zu erkennenden zweidimensionalen Eingangsbild;
   - Anpassen (920) des gespeicherten individualisierten dreidimensionalen Gesichtsmodells durch Abstimmen des gespeicherten individualisierten dreidimensionalen Gesichtsmodells des Benutzers mit dem zweidimensionalen Eingangsbild aus einem Blickpunkt, der gleich oder ähnlich einem Blickpunkt in dem zweidimensionalen Eingangsbild ist;
   - Erzeugen (930) eines zweidimensionalen Projektionsbildes aus dem angepassten individualisierten dreidimensionalen Gesichtsmodell, wobei das Erzeugen des zweidimensionalen Projektionsbildes aus dem angepassten 3D-Gesichtsmodell Folgendes umfasst: Projizieren des angepassten dreidimensionalen Gesichtsmodells, das mit dem 2D-Eingangsbild aus einem Blickpunkt, der gleich oder ähnlich einem Blickpunkt in dem zweidimensionalen Eingangsbild ist, abgestimmt wurde, wobei die in dem 2D-Projektionsbild erscheinende Gesichtshaltung gleich oder ähnlich einer in dem 2D-Eingangsbild erscheinenden Gesichtshaltung des Benutzers ist; und
   - Durchführen einer Gesichtserkennung (940) durch Vergleichen des zweidimensionalen Eingangsbildes mit dem zweidimensionalen Projektionsbild.

2. Verfahren nach Anspruch 1, wobei das Anpassen des gespeicherten dreidimensionalen Gesichtsmodells Folgendes umfasst: Anpassen einer Gesichtshaltung und eines Gesichtsausdrucks des gespeicherten dreidimensionalen Gesichtsmodells durch Abbilden des erfassten Gesichtsmerkmalspunkts auf dem gespeicherten dreidimensionalen Gesichtsmodell.

3. Verfahren nach Anspruch 1, wobei das Anpassen des gespeicherten individualisierten 3D-Formmodells Folgendes umfasst: Anpassen eines Haltungsparameters und eines Ausdrucksparameters des 3D-Gesichtsmodells auf der Grundlage des erfassten Gesichtsmerkmalspunkts.

4. Verfahren nach Anspruch 1, wobei das Erzeugen Folgendes umfasst:

   Bestimmen eines Parameters zum Abbilden der erfassten Gesichtsmerkmalspunkte auf Merkmalspunkte eines 3D-Standardmodells; und
   Erzeugen des verformbaren 3D-Formmodells durch Anwenden der bestimmten Parameter auf das 3D-Standardmodell.

5. Verfahren zur Gesichtserkennung nach einem der vorangegangenen Ansprüche, wobei beim Erzeugen das verformbare 3D-Texturmodell auf der Grundlage des verformbaren 3D-Formmodells und von aus wenigstens einem der 2D-Gesichtsbilder stammenden Texturinformationen erzeugt wird.

6. Verfahren nach einem der vorangegangenen Ansprüche, wobei das Erzeugen Folgendes umfasst:

Bestimmen eines Parameters zum Abbilden der erfassten Gesichtsmerkmalspunkte auf Merkmalspunkte eines 3D-Standardmodells; und

Erzeugen des verformbaren 3D-Formmodells durch Anwenden der bestimmten Parameter auf das 3D-Standardmodell, und/oder

wobei das verformbare 3D-Texturmodell Eckpunkte des verformbaren 3D-Formmodells umfasst, und/oder

wobei die 2D-Gesichtsbilder Bilder des Gesichts des Benutzers aus verschiedenen Blickpunkten umfassen.

7. Verfahren nach Anspruch 1, wobei das gespeicherte individualisierte 3D-Gesichtsmodell ein 3D-Formmodell und ein 3D-Texturmodell enthält, und wobei das Anpassen des gespeicherten individualisierten 3D-Gesichtsmodells Folgendes umfasst:

Anpassen des gespeicherten individualisierten 3D-Formmodells auf der Grundlage des in dem 2D-Eingangsbild erfassten Gesichtsmerkmalspunkts; und

Anpassen des 3D-Texturmodells auf der Grundlage von Parameterinformationen des angepassten 3D-Formmodells.

8. Verfahren nach einem der vorangegangenen Ansprüche, wobei es sich bei dem 3D-Formmodell und dem 3D-Texturmodell um 3D-Modelle handelt, bei denen eine Gesichtshaltung und ein Gesichtsausdruck verformbar sind, und/oder

wobei das 2D-Projektionsbild eine Gesichtshaltung enthält, die mit einer Gesichtshaltung in dem 2D-Eingangsbild identisch ist, und/oder

wobei das Durchführen der Gesichtserkennung Folgendes umfasst:

Bestimmen eines Grades der Ähnlichkeit zwischen dem 2D-Eingangsbild und dem 2D-Projektionsbild; und

Ausgeben des Ergebnisses der Gesichtserkennung auf der Grundlage darauf, ob der Grad der Ähnlichkeit eine Bedingung erfüllt, und/oder

wobei das Erfassen des Gesichtsmerkmalspunkts Folgendes umfasst:

Extrahieren eines Gesichtsbereichs aus dem 2D-Eingangsbild; und

Erfassen des Gesichtsmerkmalspunkts in wenigstens einem der Folgenden: Augenbrauen, Augen, Nase, Lippen, Kinn, Ohren und einer Gesichtskontur aus dem extrahierten Gesichtsbereich.

9. Verfahren zur Gesichtserkennung nach einem der vorangegangenen Ansprüche, wobei das Verfahren das Erzeugen eines dreidimensionalen Gesichtsmodells umfasst, das Folgendes umfasst:

Erhalten von zweidimensionalen Gesichtsbildern und von Richtungsdaten der 2D-Gesichtsbilder, wobei die 2D-Gesichtsbilder das Gesicht eines Benutzers enthalten;

Bestimmen von Informationen über übereinstimmende Punkte in den 2D-Gesichtsbildern;

Erzeugen von 3D-Daten des Gesichts des Benutzers auf der Grundlage der Richtungsdaten der 2D-Gesichtsbilder und der Informationen über die übereinstimmenden Punkte; und

Umwandeln eines 3D-Standardmodells in ein 3D-Gesichtsmodell des Benutzers unter Verwendung der 3D-Daten.

10. Verfahren nach Anspruch 9, wobei beim Umwandeln das 3D-Standardmodell in das 3D-Gesichtsmodell des Benutzers umgewandelt wird durch Abstimmen des 3D-Standardmodells auf die 3D-Daten des Gesichts des Benutzers, und/oder

wobei es sich bei den 3D-Daten des Gesichts des Benutzers um einen Satz von 3D-Punkten handelt, der die Form des Gesichts des Benutzers konfiguriert, und/oder

wobei beim Erhalten die Richtungsdaten der 2D-Gesichtsbilder unter Verwendung von mittels eines Bewegungssensors erfasster Bewegungsdaten erhalten werden, und/oder wobei das Bestimmen Folgendes umfasst:

Erfassen von Gesichtsmerkmalspunkten in den 2D-Gesichtsbildern; und

Bestimmen der Informationen über die übereinstimmenden Punkte auf der Grundlage der erfassten Gesichtsmerkmalspunkte.

11. Nicht flüchtiges computerlesbares Medium, das Programmcode umfasst, der, wenn er von einem Prozessor ausgeführt wird, den Prozessor veranlasst, das Verfahren nach einem der vorangegangenen Ansprüche auszuführen.

12. Vorrichtung (300) zur Gesichtserkennung, die Folgendes umfasst:

eine Bilderhaltungsvorrichtung (210), die ausgelegt ist zum Erhalten von zweidimensionalen (2D) Gesichtsbildern eines Benutzers aus einer Vielzahl von Blickpunkten;
eine Merkmalspunkterfassungseinrichtung (220), die ausgelegt ist zum Erfassen von Gesichtsmerkmalspunkten in den 2D-Gesichtsbildern;
eine Einrichtung (230) zur Erzeugung eines 3D-Gesichtsmodells, die ausgelegt ist zum Erzeugen eines verformbaren 3D-Formmodells und eines verformbaren 3D-Texturmodells auf der Grundlage der erfassten Gesichtsmerkmalspunkte;
eine Einrichtung (260) zum Speichern des 3D-Gesichtsmodells, die ausgelegt ist zum Speichern des verformbaren 3D-Formmodells und des verformbaren 3D-Texturmodells als ein individualisiertes dreidimensionales Gesichtsmodell des Benutzers;
eine Bilderhaltungseinrichtung (310), die ausgelegt ist zum Erhalten eines zu erkennenden zweidimensionalen Eingangsbilds, wobei das zweidimensionale Eingangsbild einen Gesichtsbereich eines Benutzers umfasst, wobei die Bilderhaltungseinrichtung ausgelegt ist zum Erfassen eines Gesichtsmerkmalspunkts in dem zu erkennenden zweidimensionalen Eingangsbild;
einen Prozessor (320) für das dreidimensionale Gesichtsmodell, der ausgelegt ist zum Anpassen einer Gesichtshaltung des gespeicherten dreidimensionalen Gesichtsmodells auf der Grundlage einer in dem 2D-Eingangsbild erscheinenden Gesichtshaltung des Benutzers und zum Erzeugen eines zweidimensionalen Projektionsbildes aus dem angepassten individualisierten dreidimensionalen Gesichtsmodell, das mit dem 2D-Eingangsbild aus einem Blickpunkt, der gleich oder ähnlich einem Blickpunkt in dem 2D-Eingangsbild ist, abgestimmt wurde, wobei die in dem 2D-Projektionsbild erscheinende Gesichtshaltung gleich oder ähnlich einer in dem 2D-Eingangsbild erscheinenden Gesichtshaltung des Benutzers ist; und
eine Gesichtserkennungseinrichtung (350), die ausgelegt ist zum Durchführen einer Gesichtserkennung durch Vergleichen des zweidimensionalen Eingangsbildes mit dem zweidimensionalen Projektionsbild.

13. Vorrichtung zur Gesichtserkennung nach Anspruch 12, wobei der Prozessor für das dreidimensionale Gesichtsmodell zu Folgendem ausgelegt ist:

- Anpassen einer Gesichtshaltung und eines Gesichtsausdrucks des gespeicherten dreidimensionalen Gesichtsmodells durch Abbilden des erfassten Gesichtsmerkmalspunkts auf dem gespeicherten dreidimensionalen Gesichtsmodell; und/oder
- Anpassen des gespeicherten individualisierten 3D-Gesichtsmodells durch Anpassen eines Haltungsparameters und eines Ausdrucksparameters des 3D-Formmodells auf der Grundlage des erfassten Gesichtsmerkmalspunkts; und/oder

wobei die Einrichtung zur Erzeugung eines 3D-Gesichtsmodells ausgelegt ist zum Bestimmen eines Parameters zum Abbilden der erfassten Gesichtsmerkmalspunkte auf Merkmalspunkte eines 3D-Standardmodells und zum Erzeugen des verformbaren 3D-Formmodells durch Anwenden der bestimmten Parameter auf das 3D-Standardmodell.

14. Vorrichtung nach Anspruch 12 oder 13, wobei der Prozessor für das 3D-Gesichtsmodell Folgendes umfasst:

eine Gesichtsbereicherfassungseinrichtung, die ausgelegt ist zum Erfassen des Gesichtsbereichs in dem 2D-Eingangsbild; und
eine Merkmalspunkterfassungseinrichtung, die ausgelegt ist zum Erfassen eines Gesichtsmerkmalspunkts in dem erfassten Gesichtsbereich, und/oder
wobei der Prozessor für das 3D-Gesichtsmodell ausgelegt ist zum Erfassen des Gesichtsmerkmalspunkts in dem 2D-Eingangsbild und zum Anpassen der Gesichtshaltung des gespeicherten individualisierten 3D-Gesichtsmodells durch Abstimmen des erfassten Gesichtsmerkmalspunkts mit einem Merkmalspunkt des gespeicherten individualisierten 3D-Gesichtsmodells, und/oder
wobei das vorgespeicherte individualisierte 3D-Gesichtsmodell ein 3D-Formmodell und ein 3D-Texturmodell umfasst, und
wobei der Prozessor für das 3D-Gesichtsmodell ausgelegt ist zum Anpassen der Gesichtshaltung des 3D-Formmodells auf der Grundlage der in dem 2D-Eingangsbild erscheinenden Gesichtshaltung des Benutzers und zum Anpassen des 3D-Texturmodells auf der Grundlage von Parameterinformationen des angepassten 3D-Formmodells, und/oder
wobei der Prozessor für das 3D-Gesichtsmodell ausgelegt ist zum Erzeugen des 2D-Projektionsbilds durch

**EP 2 993 614 B1**

Projizieren des angepassten 3D-Texturmodells auf eine Ebene.

**15.** Vorrichtung nach Anspruch 12, 13 oder 14, die weiterhin Folgendes umfasst:
eine Anzeige, die ausgelegt ist zum Anzeigen von wenigstens einem der Folgenden: eines der 2D-Eingangsbilder, das 2D-Projektionsbild und das Ergebnis der Gesichtserkennung.

**16.** Vorrichtung nach den Ansprüchen 12 bis 15, wobei die Einrichtung zur Erzeugung eines 3D-Gesichtsmodells ausgelegt ist zum Bestimmen eines Parameters zum Abbilden der erfassten Gesichtsmerkmalspunkte auf Merkmalspunkte eines 3D-Standardmodells und zum Erzeugen des verformbaren 3D-Formmodells durch Anwenden der bestimmten Parameter auf das 3D-Standardmodell, und/oder
wobei die Einrichtung zur Erzeugung eines 3D-Gesichtsmodells Folgendes umfasst:

eine Einrichtung zur Erzeugung eines 3D-Formmodells, die ausgelegt ist zum Erzeugen des verformbaren 3D-Formmodells des Gesichts eines Benutzers auf der Grundlage der erfassten Gesichtsmerkmalspunkte; und
eine Einrichtung zur Erzeugung eines 3D-Texturmodells, die ausgelegt ist zum Erzeugen des verformbaren 3D-Texturmodells auf der Grundlage des verformbaren 3D-Formmodells und von aus wenigstens einem der 2D-Gesichtsbilder stammenden Texturinformationen.

**17.** Vorrichtung nach einem der Ansprüche 12 bis 16, wobei die Vorrichtung Folgendes umfasst:

eine Bilderhaltungsvorrichtung, die ausgelegt ist zum Erhalten von zweidimensionalen Gesichtsbildern eines Benutzers aus einer Vielzahl von Blickpunkten;
eine Bewegungserfassungseinheit, die ausgelegt ist zum Erhalten von Richtungsdaten der 2D-Gesichtsbilder;
eine Einrichtung zur Erzeugung eines 3D-Gesichtsmodells, die ausgelegt ist zum Erzeugen von 3D-Daten des Gesichts des Benutzers auf der Grundlage von Informationen über übereinstimmende Punkte aus den 2D-Gesichtsbildern und den Richtungsdaten der 2D-Gesichtsbilder, wobei die Einrichtung zur Erzeugung eines 3D-Gesichtsmodells ausgelegt ist zum Umwandeln eines 3D-Standardmodells in ein 3D-Gesichtsmodell des Benutzers unter Verwendung der 3D-Daten; und
eine Einrichtung zum Speichern des 3D-Gesichtsmodells, die ausgelegt ist zum Speichern des 3D-Gesichtsmodells des Benutzers;
um ein dreidimensionales Gesichtsmodell zu erzeugen,
wobei die Einrichtung zur Erzeugung des 3D-Gesichtsmodells vorzugsweise ausgelegt ist zum Erfassen von Gesichtsmerkmalspunkten in den 2D-Gesichtsbildern und zum Bestimmen der Informationen über die übereinstimmenden Punkte auf der Grundlage der erfassten Gesichtsmerkmalspunkte, und/oder
wobei die Einrichtung zur Erzeugung des 3D-Gesichtsmodells vorzugsweise ausgelegt ist zum Umwandeln des 3D-Standardmodells in das 3D-Gesichtsmodell des Benutzers durch Abstimmen des 3D-Standardmodells auf die 3D-Daten des Gesichts des Benutzers.

**Revendications**

**1.** Procédé de reconnaissance faciale, comprenant :

- la production d'un modèle facial tridimensionnel (3D) individualisé, grâce à :

- l'obtention (810) d'images en deux dimensions (2D) du visage d'un utilisateur à partir de multiples points de vue,
- la détection (820) de points caractéristiques du visage à partir des images en deux dimensions du visage,
- la production (830, 840) d'un modèle de forme en 3D déformable et d'un modèle de texture en 3D déformable en fonction des points caractéristiques du visage détectés, et
- l'enregistrement (850) du modèle de forme en 3D déformable et du modèle de texture en 3D déformable sous la forme d'un modèle facial en trois dimensions individualisé de l'utilisateur ;

- la détection (910) d'un point caractéristique du visage à partir d'une image d'entrée en deux dimensions à reconnaître ;
- l'ajustement (920) du modèle facial en trois dimensions individualisé enregistré, grâce à la mise en correspondance du modèle facial en trois dimensions individualisé enregistré de l'utilisateur avec l'image d'entrée en deux dimensions au niveau d'un point de vue identique ou similaire à un point de vue existant dans l'image

**19**

d'entrée en deux dimensions ;

- la production (930) d'une image en projection en deux dimensions à partir du modèle facial en trois dimensions individualisé ajusté, ladite production de l'image en projection en deux dimensions à partir du modèle facial en 3D ajusté comprend la projection du modèle facial en trois dimensions ajusté mis en correspondance avec l'image d'entrée en 2D au niveau d'un point de vue identique ou similaire à un point de vue existant dans l'image d'entrée en 2D, la pose faciale apparaissant sur l'image en projection en 2D étant identique ou similaire à une pose faciale de l'utilisateur apparaissant sur l'image d'entrée en 2D ; et

- la réalisation d'une connaissance faciale (940) par comparaison de l'image d'entrée en deux dimensions et de l'image en projection en deux dimensions.

2. Procédé selon la revendication 1, dans lequel l'ajustement du modèle facial en trois dimensions enregistré comprend l'ajustement d'une pose faciale et d'une expression faciale du modèle facial en trois dimensions enregistré en transposant le point caractéristique du visage détecté sur le modèle facial en trois dimensions enregistré.

3. Procédé selon la revendication 1, dans lequel l'ajustement du modèle facial en 3D individualisé enregistré comprend l'ajustement d'un paramètre de pose et d'un paramètre d'expression du modèle de forme en 3D en fonction du point caractéristique du visage détecté.

4. Procédé selon la revendication 1, dans lequel la production comprend :

la détermination d'un paramètre pour transposer les points caractéristiques du visage détectés sur des points caractéristiques d'un modèle type en 3D, et

la production du modèle de forme en 3D déformable en appliquant le paramètre déterminé sur le modèle type en 3D.

5. Procédé de reconnaissance faciale selon l'une quelconque des revendications précédentes, dans lequel la production entraîne la production du modèle de texture en 3D déformable en fonction du modèle de forme en 3D déformable et d'informations de texture issues d'au moins une des images de visage en 2D.

6. Procédé selon l'une quelconque des revendications précédentes, dans lequel la production comprend :

la détermination d'un paramètre pour transposer les points caractéristiques du visage détectés sur des points caractéristiques d'un modèle type en 3D, et

la production du modèle de forme en 3D déformable en appliquant le paramètre déterminé sur le modèle type en 3D ; et/ou

dans lequel le modèle de texture en 3D déformable comprend des sommets du modèle de forme en 3D déformable, et/ou

dans lequel les images de visage en 2D comprennent des images du visage de l'utilisateur à partir de différents points de vue.

7. Procédé selon la revendication 1, dans lequel le modèle facial en 3D individualisé enregistré comporte un modèle de forme en 3D et un modèle de texture en 3D, et l'ajustement du modèle facial en 3D individualisé enregistré comprend :

l'ajustement du modèle de forme en 3D individualisé enregistré en fonction du point caractéristique du visage détecté à partir de l'image d'entrée en 2D, et

l'ajustement du modèle de texture en 3D en fonction d'informations de paramètres du modèle de forme en 3D ajusté.

8. Procédé selon l'une quelconque des revendications précédentes, dans lequel le modèle de forme en 3D et le modèle de texture en 3D sont des modèles en 3D dans lesquels une pose faciale et une expression faciale sont déformables, et/ou

dans lequel l'image en projection en 2D comporte une pose faciale identique à une pose faciale existant dans l'image d'entrée en 2D, et/ou

dans lequel la réalisation de la reconnaissance faciale comprend :

la détermination d'un degré de similarité entre l'image d'entrée en 2D et l'image en projection en 2D, et

l'émission d'un résultat de la reconnaissance faciale en fonction du fait que le degré de similarité satisfait une condition, et/ou

dans lequel la détection du point caractéristique du visage comprend :

l'extraction d'une zone faciale à partir de l'image d'entrée en 2D, et
la détection du point caractéristique du visage sur : les sourcils, les yeux, le nez, les lèvres, le menton, les oreilles et/ou le contour du visage à partir de la zone faciale extraite.

9. Procédé de reconnaissance faciale selon l'une quelconque des revendications précédentes, comprenant la production d'un modèle facial en trois dimensions, comprenant :

l'obtention d'images en deux dimensions du visage et de données de direction des images de visage en 2D, les images de visage en 2D comportant le visage d'un utilisateur,
la détermination d'informations concernant des points de correspondance parmi les images de visage en 2D,
la production de données en 3D du visage de l'utilisateur en fonction des données de direction des images de visage en 2D et des informations concernant les points de correspondance, et
la transformation d'un modèle type en 3D en un modèle facial en 3D de l'utilisateur au moyen des données en 3D.

10. Procédé selon la revendication 9, dans lequel la transformation réalise une transformation du modèle type en 3D en modèle facial en 3D de l'utilisateur par mise en correspondance du modèle type en 3D avec les données en 3D du visage de l'utilisateur, et/ou
dans lequel les données en 3D du visage de l'utilisateur consistent en un ensemble de points en 3D configurant la forme du visage de l'utilisateur, et/ou
dans lequel l'obtention entraîne l'obtention des données de direction des images de visage en 2D au moyen de données de mouvement détectées par un détecteur de mouvement, et/ou dans lequel la détermination comprend :

la détection de points caractéristiques du visage à partir des images de visage en 2D, et
la détermination des informations concernant les points de correspondance en fonction des points caractéristiques du visage détectés.

11. Support non transitoire lisible par ordinateur comprenant un code de programme qui, lorsqu'il est exécuté par un processeur, amène le processeur à réaliser le procédé selon l'une des revendications précédentes.

12. Dispositif de reconnaissance faciale (300), comprenant :

un dispositif de prise d'image (210) conçu pour obtenir des images en deux dimensions (2D) du visage d'un utilisateur à partir de multiples points de vue,
un détecteur de point caractéristique (220) conçu pour détecter des points caractéristiques du visage à partir des images de visage en 2D,
un générateur de modèle facial en 3D (230) conçu pour produire un modèle de forme en 3D déformable et un modèle de texture en 3D déformable en fonction des points caractéristiques du visage détectés,
un enregistreur de modèle facial en 3D (260) conçu pour enregistrer le modèle de forme en 3D déformable et le modèle de texture en 3D déformable sous la forme d'un modèle facial en trois dimensions individualisé de l'utilisateur,
un dispositif de prise d'image (310) conçu pour obtenir une image d'entrée en deux dimensions à reconnaître, l'image d'entrée en deux dimensions comprenant une zone faciale d'un utilisateur, le dispositif de prise d'image étant conçu pour détecter un point caractéristique du visage à partir de l'image d'entrée en deux dimensions à reconnaître,
un processeur de modèle facial en trois dimensions (320) conçu pour ajuster une pose faciale du modèle facial en trois dimensions individualisé enregistré en fonction d'une pose faciale de l'utilisateur apparaissant sur l'image d'entrée en 2D et pour produire une image en projection en deux dimensions à partir du modèle facial en trois dimensions individualisé ajusté mis en correspondance avec l'image d'entrée en 2D au niveau d'un point de vue identique ou similaire à un point de vue existant dans l'image d'entrée en 2D, la pose faciale apparaissant sur l'image en projection en 2D étant identique ou similaire à une pose faciale de l'utilisateur apparaissant sur l'image d'entrée en 2D, et
un dispositif de reconnaissance de visage (350) conçu pour réaliser une reconnaissance faciale par comparaison de l'image d'entrée en deux dimensions et de l'image en projection en deux dimensions.

13. Dispositif de reconnaissance faciale selon la revendication 12, dans lequel le processeur de modèle facial en trois dimensions est conçu pour :

- ajuster une pose faciale et une expression faciale du modèle facial en trois dimensions enregistré en transposant le point caractéristique du visage détecté sur le modèle facial en trois dimensions enregistré, et/ou
- ajuster le modèle facial en 3D individualisé enregistré en ajustant un paramètre de pose et un paramètre d'expression du modèle de forme en 3D en fonction du point caractéristique du visage détecté, et/ou

dans lequel le générateur de modèle facial en 3D est conçu pour déterminer un paramètre pour transposer les points caractéristiques du visage détectés sur des points caractéristiques d'un modèle type en 3D et pour produire le modèle de forme en 3D déformable en appliquant le paramètre déterminé sur le modèle type en 3D.

14. Dispositif selon la revendication 12 ou 13, dans lequel le processeur de modèle facial en 3D comprend :

un détecteur de zone faciale conçu pour détecter la zone faciale à partir de l'image d'entrée en 2D, et
un détecteur de point caractéristique conçu pour détecter un point caractéristique du visage à partir de la zone faciale détectée, et/ou
dans lequel le processeur de modèle facial en 3D est conçu pour détecter le point caractéristique du visage à partir de l'image d'entrée en 2D, et pour ajuster la pose faciale du modèle facial en 3D individualisé enregistré par mise en correspondance du point caractéristique du visage détecté avec un point caractéristique du modèle facial en 3D individualisé enregistré, et/ou
dans lequel le modèle facial en 3D individualisé enregistré comprend un modèle de forme en 3D et un modèle de texture en 3D, et
le processeur de modèle facial en 3D est conçu pour ajuster une pose faciale du modèle de forme en 3D en fonction de la pose faciale de l'utilisateur apparaissant sur l'image d'entrée en 2D et pour ajuster le modèle de texture en 3D en fonction d'informations de paramètres du modèle de forme en 3D ajusté, et/ou
dans lequel le processeur de modèle facial en 3D est conçu pour produire l'image en projection en 2D par projection du modèle de texture en 3D ajusté sur un plan.

15. Dispositif selon la revendication 12, 13 ou 14, comprenant en outre :
un dispositif d'affichage conçu pour afficher : une des images d'entrée en 2D, l'image en projection en 2D, et/ou le résultat de la reconnaissance faciale.

16. Dispositif selon l'une quelconque des revendications 12 à 15, dans lequel le générateur de modèle facial en 3D est conçu pour déterminer un paramètre pour la transposition des points caractéristiques du visage détectés sur des points caractéristiques d'un modèle type en 3D, et pour produire le modèle de forme en 3D déformable en appliquant le paramètre déterminé sur le modèle type en 3D, et/ou
dans lequel le générateur de modèle facial en 3D comprend :

un générateur de modèle de forme en 3D conçu pour produire le modèle de forme en 3D déformable du visage de l'utilisateur en fonction des points caractéristiques du visage détectés, et
un générateur de modèle de texture en 3D conçu pour produire le modèle de texture en 3D déformable en fonction du modèle de forme en 3D déformable et d'informations de texture issues d'au moins une des images de visage en 2D.

17. Dispositif selon l'une quelconque des revendications 12 à 16, comprenant :

un dispositif de prise d'image conçu pour obtenir des images en deux dimensions du visage d'un utilisateur à partir de multiples points de vue,
une unité détectrice de mouvement conçue pour obtenir des données de direction des images de visage en 2D,
un générateur de modèle facial en 3D conçu pour produire des données en 3D du visage de l'utilisateur en fonction d'informations concernant des points de correspondance parmi les images de visage en 2D et des données de direction des images de visage en 2D, le générateur de modèle facial en 3D étant conçu pour transformer un modèle type en 3D en un modèle facial en 3D de l'utilisateur au moyen des données en 3D, et
un enregistreur de modèle facial en 3D conçu pour enregistrer le modèle facial en 3D de l'utilisateur ;
afin de produire un modèle facial en trois dimensions,
dans lequel de préférence le générateur de modèle facial en 3D est conçu pour détecter des points caractéristiques du visage à partir des images de visage en 2D, et pour déterminer les informations concernant les points de correspondance en fonction des points caractéristiques du visage détectés, et/ou

dans lequel le générateur de modèle facial en 3D est de préférence conçu pour transformer le modèle type en 3D en modèle facial en 3D de l'utilisateur en mettant en correspondance le modèle type en 3D avec le modèle facial en 3D concernant le visage de l'utilisateur.

# FIG. 1

<u>100</u>

3D standard model

110 { 
┌─130─┐     ┌─140─┐     ┌─150─┐

| Obtain 2D face images | → | Detect feature points | → | Individualize 3D model | → | 3D facial model |

120 {

2D input image →

┌─170─┐ Perform facial recognition

2D projection image

┌─160─┐ Adjust 3D facial model

Result of facial recognition

## FIG. 2

```
                                   ┌200
┌────────────────────────────────────────────────────────────────────────┐
│                   3D facial model generating apparatus                   │
│                                   ┌230                                    │
│                       ┌────────────────────────────┐                     │
│                       │     3D facial model        │                     │
│             ┌210      │        generator           │                     │
│   ┌──────────────┐    │               ┌240         │                     │
│   │              │    │  ┌──────────────────────┐  │        ┌260         │
│   │Image acquirer│───▶│  │   3D shape model     │  │  ┌──────────────┐   │
│   │              │    │  │     generator        │  │  │ 3D facial model│  │
│   └──────┬───────┘    │  └──────────┬───────────┘  │─▶│  registerer   │  │
│          │  ┌220      │             │   ┌250        │  └──────────────┘   │
│          ▼            │  ┌──────────▼───────────┐  │                     │
│   ┌──────────────┐    │  │  3D texture model    │  │                     │
│   │Feature point │───▶│  │     generator        │  │                     │
│   │  detector    │    │  └──────────────────────┘  │                     │
│   └──────────────┘    └────────────────────────────┘                     │
│                                   ▲                                       │
└───────────────────────────────────┼──────────────────────────────────────┘
                                    │        ┌270
                                    ▼
                             ┌──────────────┐
                             │   Memory     │
                             └──────────────┘
```

**FIG. 3**

# FIG. 4

# FIG. 5

510

520

530

540

550

**FIG. 6**

## FIG. 7

710

720

730

# FIG. 8

```
                    ┌──────────────┐
                    │    Start     │
                    └──────┬───────┘
                           │              ⌐810
        ┌──────────────────▼──────────────────┐
        │   Obtain 2D face images through camera   │
        └──────────────────┬──────────────────┘
                           │              ⌐820
        ┌──────────────────▼──────────────────┐
        │  Detect facial feature points from 2D face images  │
        └──────────────────┬──────────────────┘
                           │              ⌐830
        ┌──────────────────▼──────────────────┐
        │  Generate 3D shape model based on detected feature points  │
        └──────────────────┬──────────────────┘
                           │              ⌐840
        ┌──────────────────▼──────────────────┐
        │  Generate 3D texture model based on texture information  │
        │              and 3D shape model              │
        └──────────────────┬──────────────────┘
                           │              ⌐850
        ┌──────────────────▼──────────────────┐
        │  Register and store 3D shape model and 3D texture model  │
        │              as 3D facial model of user              │
        └──────────────────┬──────────────────┘
                           │
                    ┌──────▼───────┐
                    │     End      │
                    └──────────────┘
```

# FIG. 9

Start

Detect facial feature point from 2D input image ⟋910

Adjust 3D facial model based on detected feature point ⟋920

Generate 2D projection image from 3D texture model ⟋930

Perform facial recognition by comparing 2D input image to 2D projection image ⟋940

End

**FIG. 10**

1000

3D facial model generating apparatus

1010

Image acquirer

1020

Motion sensing unit

1030

3D facial model generator

1040

3D facial model registerer

1070

Memory

# FIG. 11

Start

1110
Obtain 2D face images and direction data of 2D face images

1120
Determine information on matching points between 2D face images

1130
Generate 3D data on face of user

1140
Transform 3D standard model to 3D facial model of user using
3D data on face of user

End

**REFERENCES CITED IN THE DESCRIPTION**

**Patent documents cited in the description**

- EP 2133819 A